# EUROPEAN PATENT SPECIFICATION

(11) **EP 1 897 683 B1**
(45) Date of publication and mention of the grant of the patent: **19.08.2009**
(21) Application number: 05754727.5
(22) Date of filing: 08.06.2005
(51) Int. Cl.: B32B 7/02, C09D 5/18, C08K 3/04, B32B 27/00, C08K 7/02

(54) **FIRE-RETARDANT FELT MATERIAL**
FLAMMHEMMENDES FILZMATERIAL
MATIERE EN FEUTRE IGNIFUGE

(43) Date of publication of application: 12.03.2008
(73) Proprietor: Grupo Industrial Catensa, S.A., 08007 Barcelona (ES)
(72) Inventor: PALOU GODALL, Ramón, E-08007 Barcelona (ES); STIEGLER, Marcus, E-08007 Barcelona (ES)
(74) Representative: Matamoron Hernandez, José Pedro
(86) International application number: PCT/ES2005/000324
(87) International publication number: WO 2006/131572

(56) References cited:
- EP-A1- 1 055 714
- ES-T3- 2 161 467
- JP-A- 04 142 931

## Description

### Aim of the invention

The present invention refers to a fire-retardant felt material to be used in soundproof and fire-retardant insulating materials.

### Background to the invention

Currently, the use of soundproof and / or fire-retardant insulating materials is well spread in the building and car manufacturing sectors, among others.

One of these materials used is felt. Felt consists on an unbladed, no-warp fabric, interleaving unspun cotton fibres, usually mixed with small quantities of vegetable or synthetic fibres. Among the fibres used, together with cotton, in order to manufacture felt, there are some vegetable fibres, such as hemp, ramie or jute, as well as synthetic fibres such as rayon, nylon and several polymeric fibres. A binder is added to it in order to provide consistency and a minimal rigidity, which is usually a resin. At an industrial level, felt can be found in two states: pre-polymerised, where the binder has not yet polymerised, and which can consequently be used as raw material for the manufacturing of moulded pieces; and polymerised, where the binder has already polymerised creating a structure network which confers the sufficient mechanic properties to the material.

In order to polymerise the binder, it is necessary to increase the temperature and / or the pressure on the material within a mould. These values will depend on the type of material used. Once the felt has polymerised, it has a greater consistency and rigidity, which are provided by the joint of the binder with the rest of materials which form the felt. The final properties of the felt will depend on the material used, as well as on the binder material, and even on the polymerisation process and on its main parameters (pressure and temperature).

Therefore, if the binder and its polymerisation process are modified, several distinct products can be obtained, namely different types of felt with different properties (basically mechanical, such as rigidity and consistency, as the insulating properties remain the same).

Felt can be applied to a great range of industries, particularly to car manufacturing and building industries, as all the materials intended for car manufacturing and building industries must feature a specific resistance to fire, with a requirement level depending on the type of application, as well as on the distance from its final assembly to a possible source of heat and / or flame. With this aim, retardant or fire-retardant materials are used in the manufacturing of felt.

Some changes in European law, such as the unification of certifications of building materials as "Euroclasses", as well as several changes in the specifications of soundproof materials for engines, have increased the level of requirements in the resistance to fire in specific parts.

In order to understand retarding devices, a distinction must be made among the different classes of resistance to fire; flame resistance, radiation resistance, flame spreading and fire pocket spreading.

Currently, chemical flame retardants are used in felt or agglomerate felt textiles with thermo-endurant resins, ammonia polyphosphate or boric salts, which are already included in resin in a percentage between 15 and 30 %. The use of other halogen-based compounds is restricted in all the sectors, due to its negative effect on the ozone layer.

The general device of these compounds consists in the creation of radicals during combustion. When a flame catches a combustible material, it is burnt out due to the effect of the heat of the flame, and it releases gases which react with the oxygen present in the air, which generate combustion and heat products which, in its turn decomposes the material again. The radicals of the compounds are called "flame retardants", as they require a flame in order to be activated.

However, if the main source of combustion is outside the material / retardant system, as it is in the case of long-term application flame tests (for instance PV3357 by Volkswagen during 5 minutes, or STD1028, 5816 by Volvo during 10 minutes) retardants only apply in threshold areas of the application, while in its focus, all the materials are decomposed, including retardants.

The result is that the application area of the exciting flame is completely destroyed, which is permitted within an area defined by the above mentioned specifications, but which creates a great amount of highly harmful combustion smoke, caused especially by the presence of retardants which form different types of compounds, among which we may quote acids when they are in contact with air humidity or the mucus surface of the respiratory system.

In the case of fire pocket, it is a flameless combustion. Its quick extinction is one of the most important targets in specifications for all non-metallic parts in engines and devices with electric wires. In order to meet this requirement, in many cases, and depending on the density of the material, it is mandatory to increase the contents of fire-retardant materials. But bearing in mind that they, in their turn, take part in the formation of a tri-dimensional network during the polymerisation, a limit exists in the resin / fire-retardant material relationship, and the resin content must be increased in order to achieve a part with the same features as a non-fire-retardant part. On the other side, 50% of non-fibre compounds implies a limitation in the manufacturing of felt in order to achieve a constant and homogeneous material.

In parts with a high level of requirement when fire pocket is extinguished, and where the maximal retardant content attainable is not sufficient, an amount of fibreglass, which may be up to 40%, is added to the mix. Besides the high cost of fibreglass, the production of felt in combination with it is troublesome, and they imply a significant investment in production lines in order to prepare them and to protect workers. Both the handling of intermediate materials and of final parts require an additional protection, and they may cause annoyance in the form of skin and eye irritation. ,

The current solution in order to meet the prolonged flame tests consists in the use of pre-oxidised polyacrylonitrile fibres (PANOX fibres or carbon fibres) in a percentage between 30 and 50%. After its manufacturing and before being applied into the non-woven fabric, those fibres undergo an oxidation process similar to that which takes place during combustion, and thus a high resistance is attained to any kind of further oxidation. This additional treatment step dramatically increases the cost of the fibre and, globally, increases significantly the cost of the final part

PCT Patent WO-A-9929500 (HORTON, BILL D_{.}) refers to an open weave, air permeable fiber pad that is formed from a plurality of compressed interlocked fiber strands (26) A non-uniform, three-dimensional grid of spaced apart, expandable graphite particles (28) are secured at randomly spaced apart intervals to the individual fiber strands (26) with a particle distribution density sufficient to form a barrier to air flow through a defined area of the fiber pad when exposed to a source of heat causing the expandable graphite particles (28) to be converted from their normal volume to a heat-activated, substantially expanded volume.

Canadian Patent CA-A-2537391 (NAGOYA OILCHEMICAL CO.. LTD) refers to a flame-retardant fiber sheet which comprises fibers and exfoliated -grag)hde incorporated therein and a formed article manufactured from the flame-retardant fiber sheet When the fiber sheet is exposed to a high temperature said exfoliated garaphite expands and imparts setf-extinguishing property to the sheet. The above fiber sheet and formed article exhibits high flame retardance and is harmless to a human being and an animal, and thus is useful for an interior material for an automobile or building; and the like.

US Patent US-A-4454190 (MASAYUKI KATAGIRI) refers to an expandable ceramic fiber felt to be used as a insulating material comprising ceramic refractory fibrous material, about to 20 weight percent of expandable graphite flakes, and an organic binder. The graphite flakes expand upon heating thereby causing the ceramic fiber felt to expand to fill the gap of an expansion joint or seal of furnace wall.

### Description of the invention

The fire-retardant felt material of the present invention features some specific technical characteristics which permit a better fire-retardant resistance to the flame, as well as a higher protection. The present invention is addressed to a great variety of applications in soundproof and heat-insulating parts based on textile fabric, where a high resistance to fire is required, due to the fact that they are installed in the passenger compartment or the vehicle engine, as well as in buildings.

The material of the invention comprises a type of felt to which expandable graphite has been added as a fire-retardant element. Graphite, generally, features a crystalline structure based on overlapped layers of hexagonal atom groups. Its layers are quite stable and resistant, while the joint between the overlapped layers is weaker. Expandable graphite comprises preferably a nitrogen- or sulphur-based compound between the layers. In this way, when graphite warms up, its layers are split like an accordion, and graphite increases its original size up to 350 times as from 250°C, approximately.

The fire-retardant felt material, which consists of fibres, binder and expandable graphite, has the feature that, when it is heated, for instance through the application of a flame, it provokes the increase in the size of expandable graphite particles, thus occupying the space between the fibres until they create a heat-resistant layer, and whose growth is orientated toward the heat source. This effect is particularly visible in the surface of a felt part, thus creating a superficial layer of graphite, which prevents the entrance of the flame and the heat.

With this system, felt does not release a great amount of harmful and polluting smoke when it is exposed to a flame. Furthermore, as the material is not worn out like other flame-retardants, there is no risk of exhaustion in case of a prolonged flame.

Besides, the use of expandable graphite makes it possible to use textile fibres of natural origin, such as cotton, hemp, jute and others.

It has been previewed that the fire-retardant felt of the present invention can feature a coating in order to avoid that it soaks fluids which may spill, such as oil, water or fuel in the case of a vane motor. Therefore, the part manufactured with the fire-retardant material is coated with a 100% polyester non-woven fabric. Due to the fact that the back felt has no solvent or retardant products for a conventional flame, this polyester doesn't need such solvents or flame-retardant products, either.

### Preferred embodiment of the invention

In a preferred embodiment of the fire-retardant felt material, it comprises:
- Expandable graphite, between 10 and 25 wt. - %.
- Polymerisable binder, between 20 and 45 wt. - %.
- Fibers, the remainder up to 100%.

Optionally, the fire-retardant felt material with the above mentioned composition can feature an additional surface coating with a 100% polyester non-woven fabric.

Once the nature of the invention, as well as an example of a preferred embodiment, has been duly described, it is stated for any suitable purpose that the materials, shape, size and disposition of the elements described can be modified, as long as it does not alter the basic features of the invention which are claimed as follows.

## Claims

1. Fire-retardant felt material, of the type that comprises a textile fibre, expandable graphite as a fire retardant and a polymeric binder, **characterised by** the fact that it comprises, a 100% external polyester coating and by the fact that the percentages in weight, of the expandable graphite, the polymeric binder and the textile fibres are between the following values : expandable graphite between 10 and 25 wt. -%, binder between 20 and 45 wt. -%, and the remaining percentage of textile fibres.

2. Material according to claim no.1, **characterised by** the fact that textile fibres are of natural origin.

3. Material according to claim no.2 **characterised by** the fact that textile fibres are of vegetable origin.

4. Material according to claim no.1, **characterised by** the fact that the binder is a polymerisable resin.

5. Material according to claim no.1, **characterised by** the fact that the outer coating is a sheet of non-woven fabric.

## Patentansprüche

1. Feuerfestes Filzmaterial der Art, das aus einer Textilfaser, dehnbarem Graphit als Flammenschutzmittel und einem polymeren Bindemittel besteht, **dadurch gekennzeichnet, dass** es einen äußeren Überzug aus 100% Polyester aufweist und dass die Anteile an dehnbarem Graphit, polymerem Bindemittel und Textilfaser in Gewichtsprozenten ausgedrückt zwischen den folgenden Werten Liegen: dehnbares Graphit 10 bis 25 Gew.%, Bindemittel 20 bis 45 Gew.% und der restliche Prozentsatz an Textilfasern.

2. Material nach Anspruch 1, **dadurch gekennzeichnet, dass** die Textilfasern natürlicher Herkunft sind.

3. Material nach Anspruch 2, **dadurch gekennzeichnet, dass** die Textilfasern pflanzlicher Herkunft sind.

4. Material nach Anspruch 1, **dadurch gekennzeichnet, dass** das Bindemittel ein polymerisierbares Harz ist.

5. Material nach Anspruch 1, **dadurch gekennzeichnet dass** der äußere Überzug eine Vliesstoffbahn ist.

## Revendications

1. Matériel en feutre, retardateur de feu, du type que comprends une fibre textile, graphyte extensible comme retardateur de feu et un liant polymérique **caractérisé par le fait qu'**il comprends un revêtement externe 100% polyester et **par le fait que** les pourcentages, en poids, du graphyte extensible, le liant polymèrique et les fibres textiles se trouvent entre les valeurs suivants: graphyte extensible entre 10 et 25 % du poids, liant entre 20 et 45 % du poids, et le pourcentage restant de fibres textiles.

2. Matériel selon revendication no. 1, **caractérisé par le fait que** les fibres textiles sont d'origine naturel.

3. Matériel selon revendication no. 2, **caractérise par le fait que** les fibres textiles sont d'origine végétal.

4. Matériel selon revendication no. 1, **caractérisé par le fait que** le liant est une résine polymèrisable.

5. Matériel selon revendication no. 1, **caractérisé par le fait que** le revêtement externe est une feuille de tissu non tissé.
